# EUROPÄISCHE PATENTSCHRIFT

(11) **EP 0 965 076 B1**
(45) Veröffentlichungstag und Bekanntmachung des Hinweises auf die Patenterteilung: **21.11.2001**
(21) Anmeldenummer: 98912272.6
(22) Anmeldetag: 18.02.1998
(51) Int. Cl.: G06F 1/00, G06F 12/14

(54) **ELEKTRONISCHE DATENVERARBEITUNGSEINRICHTUNG UND -SYSTEM**
ELECTRONIC DATA PROCESSING DEVICE AND SYSTEM
DISPOSITIF ET SYSTEME DE TRAITEMENT ELECTRONIQUE DE DONNEES

(30) Priorität: 03.03.1997 DE 19708616
(43) Veröffentlichungstag der Anmeldung: 22.12.1999
(73) Patentinhaber: Infineon Technologies AG, 81669 München (DE)
(72) Erfinder: SEDLAK, Holger, D-85658 Egmating (DE)
(74) Vertreter: Hermann, Uwe, Dipl.-Ing.
(86) Internationale Anmeldenummer: DE9800488
(87) Internationale Veröffentlichungsnummer: WO9839701

(56) Entgegenhaltungen:
- EP-A- 0 752 635
- WO-A-95/16238

## Beschreibung

Die Erfindung betrifft eine elektronische Datenverarbeitungseinrichtung mit einer Verarbeitungseinheit wie beispielsweise einem Mikroprozessor, mit wenigstens einem Datenspeicher und mit einem sich zwischen Datenspeicher und Verarbeitungseinheit erstreckenden Bus. Die Erfindung betrifft außerdem ein elektronisches Datenverarbeitungssystem mit einer solchen Datenverarbeitungseinrichtung.

Die gattungsgemäßen elektronischen Datenverarbeitungseinrichtungen werden häufig bei sicherheitskritischen Anwendungen eingesetzt. Dabei werden im Datenspeicher vertrauliche Daten, Geldwerte und Zugangsberechtigungen abgelegt, die von der Verarbeitungseinheit beispielsweise auf eine externe Anforderung hin verarbeitet werden.

Da der Speicher Informationen enthält, auf die möglichst von außen nicht zugegriffen können werden soll, ist es notwendig, Sicherheitsmaßnahmen gegen Manipulationen der elektronischen Datenverarbeitungseinrichtung zu treffen.

Wenn eine gattungsgemäße elektronische Datenverarbeitungseinrichtung als integrierter Schaltkreis ausgeführt ist, kann diese mit verschiedenen Passivierungsschichten abgedeckt werden. Dabei können die Passivierungsschichten so angelegt sein, daß eine Entfernung einer Passivierungsschicht die Zerstörung des Datenspeichers zur Folge hat. Weiterhin kann man den Datenspeicher in tieferliegenden Schichten des integrierten Schaltkreises vergraben, so daß der Zugriff auf ihn erschwert wird.

Eine weitere Möglichkeit, eine elektronische Datenverarbeitungseinrichtung gegen unerwünschte Manipulationen zu schützen, besteht in der Verwendung von Sensoren, die Betriebsbedingungen der elektronischen Datenverarbeitungseinrichtung abtasten. Sobald ein von einem Sensor abgetasteter Wert außerhalb eines normalen Wertes liegt, werden entsprechende Sicherungsmaßnahmen ausgelöst, die zu einer Inaktivierung der elektronischen Datenverarbeitungseinrichtung oder auch zu einem Löschen des Datenspeichers führen.

Weiterhin gibt es auch Software-Sensoren, die den Betrieb der Verarbeitungseinheit auf verbotene Befehle hin oder auf Zugriffe auf Adressbereiche hin überwachen, die für einen bestimmungsgemäßen Betrieb gesperrt sind. Außerdem kann die Zugangssequenz auf ihre Richtigkeit hin überwacht werden.

Schließlich ist es noch bekannt, in einem besonderen Herstellungsmodus erlaubte Speicherzugriffe der Verarbeitungseinheit auf den Datenspeicher durch besondere Hardware-Vorrichtungen wie beispielsweise auftrennbar ausgestaltete Verbindungsbahnen einzuschränken.

Trotz der bevorstehend ausgeführten Sicherheitsmaßnahmen kann es dennoch gelegentlich zu unerwünschten Manipulationen an den gattungsgemäßen elektronischen Datenverarbeitungseinrichtungen kommen.

Es ist daher Aufgabe der Erfindung, eine gattungsgemäße elektronische Datenverarbeitungseinrichtung und ein elektronisches Datenverarbeitungssystem bereitzustellen, die oder das einen verbesserten Schutz gegen unerwünschte Veränderungen und/oder Ausspionieren von Speicherinhalten aufweist.

Die Aufgabe wird durch eine elektronische Datenverarbeitungseinrichtung gemäß Anspruch 1 bzw. Anspruch 7 gelöst. Vorteilhafte Weiterbildungen sind in den Unteransprüchen angegeben.

Danach weist die elektronische Datenverarbeitungseinrichtung eine Verarbeitungseinheit auf, die über einen Bus mit zumindest einem Speicher verbunden ist. Der Verarbeitungseinheit ist eine Verschlüsselungseinheit zugeordnet, wobei zumindest ein geheimer Schlüssel in dem oder einem der Speicher abgespeichert ist und zumindest alle sicherheitsrelevanten Daten verschlüsselt in dem oder den Speicher(n) gespeichert sind oder werden. Ein Vergleicher zum Vergleichen des gespeicherten geheimen Schlüssels mit einem von einem Benutzer einzugebenden Schlüsselwort steuert eine die Verschlüsselungseinheit ansteuernde Verriegelungseinheit an, so daß eine Entschlüsselung gespeicherter Daten nur bei positivem Vergleich möglich ist.

Die Erfindung beruht auf der erfindungswesentlichen Erkenntnis, daß sich durch neue technische Verfahren die Manipulierbarkeit gerade von als integrierte Schaltkreise ausgeführte elektronische Datenverarbeitungseinrichtungen erleichtert hat. So ist aus der Sicht eines Manipulierers eine elektronische Datenverarbeitungseinrichtung in einem integrierten Schaltkreis nicht mehr nur als Chip in seiner Gesamtheit zu sehen, sondern als ein aus einzelnen Komponenten auf einem Siliziumträger bestehendes System, bei dem auf die Komponenten separat zugegriffen werden kann.

Demzufolge gibt es die Möglichkeit, durch Beobachtung des Datenverkehrs auf dem Datenbus oder durch Auslesen des Datenspeichers Rückschlüsse auf die im Datenspeicher gespeicherten Informationen zu ziehen, so daß eine Manipulation erleichtert wird bzw. auf eigentlich geheimzuhaltende Speicherinhalte auf diese Weise zugegriffen werden kann.

Gemäß einer weiteren erfindungswesentlichen Erkenntnis lassen sich viele Manipulationen an den gattungsgemäßen elektronischen Datenverarbeitungseinrichtungen darauf zurückführen, daß es gelungen ist, den Datenverkehr auf dem Datenbus "abzuhären", so daß der Programmablauf in der Verarbeitungseinheit beobachtet und unerwünschterweise verstanden werden kann.

In einer möglichen Ausbildung der Erfindung ist die Verschlüsselungseinheit so ausgebildet, daß Datenverkehr auf dem Datenbus mittels eines Verschlüsselungs-Algorithmus verschlüsselbar ist. Eine derartig ausgebildete Verschlüsselungseinheit bringt den Vorteil mit sich, bei einer Massenfertigung besonders kostengünstig herstellbar zu sein. Jedoch dauert eine Verschlüsselung mit einem Algorithmus heute noch sehr lang, da dadurch umfangreiche Berechnungen in der Verarbeitungseinheit notwendig werden.

In einer anderen Ausgestaltung der Erfindung ist die Verschlüsselungseinheit so ausgebildet, daß Datenverkehr auf dem Datenbus mittels Hardware-Verschlüsselung verschlüsselbar ist. Gerade bei Hardware-Verschlüsselung ist ein Betrieb der erfindungsgemäßen Datenverarbeitungseinrichtungen in Echtzeit bereits auf sehr einfache Weise zu verwirklichen, und zwar sowohl bei Lese- als auch bei Schreibzugriff auf den Datenspeicher.

Eine Hardware-Verschlüsselung kann gemäß der Erfindung mit einer Verschlüsselungseinheit erfolgen, die so ausgebildet ist, daß die Wertigkeiten einzelner Bit des Datenverkehrs selektiv änderbar ist. Dann erscheinen Bits, die im Speicher beispielsweise als "LOW" abgelegt sind, im Datenverkehr auf dem Datenbus als "HIGH". Dies kann zum Beispiel mit einer Verschlüsselungseinheit erfolgen, die wenigstens ein EXOR-Glied aufweist.

In einer weiteren möglichen Ausgestaltung der Erfindung kann die Verschlüsselungseinheit so ausgebildet sein, daß die Anschlußreihenfolge von Datenleitungen des Datenbus selektiv änderbar ist. Dies äußert sich nach außen hin so, als ob einzelne Bitleitungen des Datenbus vertauscht wären.

Schließlich kann die Hardware-Verschlüsselung bei der erfindungsgemäßen Datenverarbeitungseinrichtung auch durch eine Verschlüsselungseinheit ausgeführt werden, die so ausgebildet ist, daß der Datenverkehr zwischen Datenbus und Verarbeitungseinheit und/oder zwischen Datenbus und Datenspeicher wenigstens teilweise selektiv verzögerbar ist. Dadurch wird auf dem Datenbus ein Datenverkehr vorgetäuscht, der keinen Bezug zu dem momentanen Betriebszustand der erfindungsgemäßen elektronischen Datenverarbeitungseinrichtung hat.

Dabei besteht ein wesentliches Merkmal der erfindungsgemäßen Datenverarbeitungseinrichtung darin, daß die Verschlüsselungseinheit so ausgebildet ist, daß die Verschlüsselung selektiv arbeitet. Dies bedeutet nicht nur, daß eine Verschlüsselung wahlweise erfolgen oder unterbleiben kann. Darüber hinaus umfaßt dies gemäß der Erfindung auch, daß zwischen verschiedenen Schlüsseln zum Verschlüsseln des Datenverkehrs gewechselt werden kann. In diesem Fall bekommt der Einsatz der erfindungsgemäßen Verschlüsselungseinheit ein dynamisches Verhalten.

Gerade bei der erfindungsgemäßen Datenverarbeitungseinrichtung mit wechselnden Schlüsseln ist vorgesehen, daß Datenverarbeitungseinrichtungen eines Fertigungsloses jeweils unterschiedliche und individuelle Schlüssel bekommen. Dadurch ist gewährleistet, daß selbst bei Kenntnis des Schlüssels einer Datenverarbeitungseinrichtung noch nicht auf die Schlüssel anderer Datenverarbeitungseinrichtungen geschlossen werden kann. Außerdem kann bei Speicherung im ROM für beispielsweise jedes ROM-Programm ein anderer Schlüssel verwendet werden. Bei Speicherung in einem programmierbaren Festwertspeicher wie beispielsweise einem EEPROM oder einem Flash-Speicher kann für jede Datenverarbeitungseinrichtung ein individueller Schlüssel eingegeben werden. Selbstverständlich muß im Speicher in irgendeiner Form abgelegt werden, welche zu einem Schlüssel zugehörigen Daten in welchen Adressen des Datenspeichers bzw. der Datenverarbeitungseinrichtung abgelegt sind.

In Weiterbildung der Erfindung ist zumindest ein der Verschlüsselungseinheit zugeordnetes Register vorgesehen, in das - oder bei mehreren, in die- der oder die geheime(n) Schlüssel temporär gespeichert werden. Es muß jedoch dafür gesorgt werden, daß nach dem Abschalten der Datenverarbeitungseinrichtung diese(s) Register wieder gelöscht ist/sind. In vorteilhafter Weise sind die Register als flüchtige Speicher ausgebildet.

In besonders vorteilhafter Ausbildung der Erfindung ist der oder sind die geheime(n) Schlüssel in kodierter Form abgespeichert, wobei die Kodierung mittels einer sogenannten Einwegfunktion (one-way-function) erfolgt. Dies ist eine Kodierung, die nicht oder nur mit immensem Aufwand dekodiert werden kann. Auf dem Halbleiterchip, auf dem die erfindungsgemäße Datenverarbeitungseinrichtung realisiert ist, ist somit nur eine kodierte Form der geheimen Schlüssel vorhanden, mit der eine Entschlüsselung der verschlüsselt gespeicherten Daten nicht möglich ist. Auch durch eine sehr aufwendige detaillerte Untersuchung des Halbleiterchips ist es somit nicht möglich, sämtliche relevanten Informationen für einen Mißbrauch zu erlangen.

Erst nach der Eingabe eines Schlüsselwortes durch einen Benutzer, der Kodierung dieses Schlüsselwortes mittels der Einwegfunktionsschaltung in der Datenverarbeitungseinrichtung und einem positiven Vergleich des kodierten Schlüsselwortes mit der kodiert gespeicherten Geheimzahl wird das unkodierte Schlüsselwort in ein flüchtiges Register geschrieben und steht dort zur Ent- oder Verschlüsselung der Speicherinhalte der Datenverarbeitungseinrichtung mittels der Verschlüsselungseinheit zur Verfügung. Nach dem Abschalten der Datenverarbeitungseinrichtung ist das Schlüsselwort wieder gelöscht.

In Weiterbildung der erfindungsgemäßen Datenverarbeitungseinrichtung werden für unterschiedliche Adreßbereiche der Speicher unterschiedliche Schlüssel benutzt. Hierfür ist ein Adreßdekoder vorgesehen, in dem die entsprechenden Adreßbereiche und die ihnen zugeordneten Schlüsselregister gespeichert sind.

Wenn mehrere Schlüssel verwendet werden, müssen auch mehrere Schlüsselwörter von dem oder bei Mehrbenutzersystemen den Benutzern eingegeben werden, um eine Entschlüsselung der gespeicherten Daten zu ermöglichen. Diese Schlüsselwörter stehen dann nach einem positiven Vergleich mit den gespeicherten kodierten Schlüsseln in den Registern und können von dort beispielsweise mittels des Adreßdekodierers ausgewählt werden.

Eine bestimmungsgemäße Funktion der erfindungsgemäßen Datenverarbeitungseinrichtung ist nur in Verbindung mit einem Lesegerät möglich, in das ein Benutzer -beispielsweise mittels einer Tastatur- das nur ihm bekannte Schlüsselwort eingeben kann. Das Schlüsselwort wird von dort zur Datenverarbeitungseinrichtung, die vorteilhafterweise in einer Chipkarte angeordnet ist, übermittelt.

Die Erfindung wird nachfolgend anhand eines Ausführungsbeispiels mit Hilfe von Figuren näher erläutert. Dabei zeigen
- Figur 1: eine Prinzipdarstellung eines erfindungsgemäßen Datenverarbeitungssystems und
- Figur 2: eine detailliertere Darstellung der erfindungsgemäßen elektronischen Datenverarbeitungseinrichtung.

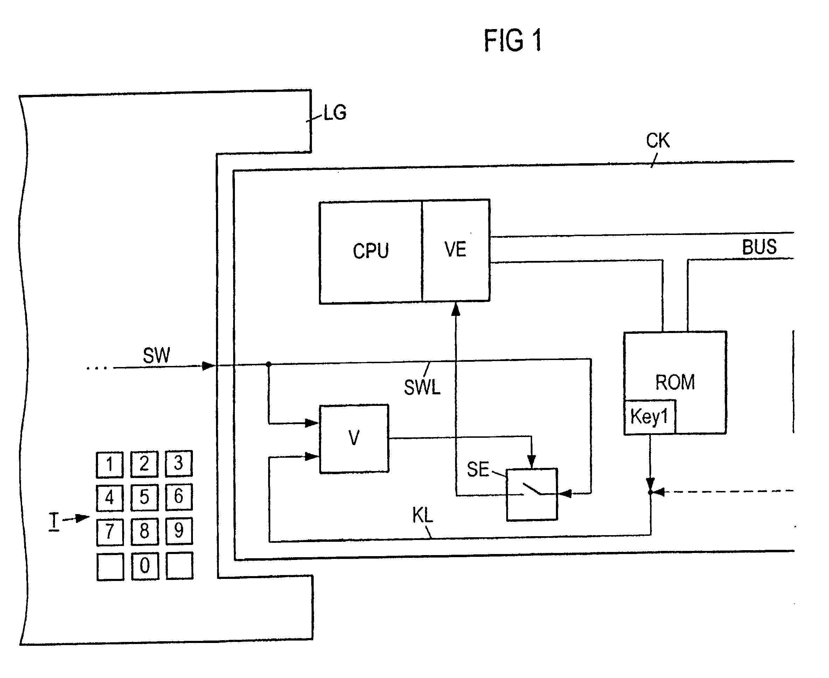

Figur 1 zeigt in sehr schematischer Weise ein erfindungsgemäßes Datenverarbeitungssystem mit einem Lesegerät LG und einer in dieses eingeführten Chipkarte CK. Die Erfindung ist jedoch nicht auf die Kartenform einer Datenverarbeitungseinrichtung beschränkt, sondern kann ebenfalls beispielsweise mit Schlüsseln oder Armbanduhren realisiert werden. Die Informationsübertragung vom Lesegerät LG zur Chipkarte CK kann sowohl kontaktbehaftet als auch kontaktlos erfolgen.

Das Lesegerät LG weist eine Tastatur T auf, in die ein Schlüsselwort SW durch einen Benutzer eingegeben werden kann. Das Schlüsselwort SW wird dann vom Lesegerät LG zur Chipkarte CK übertragen.

In der Chipkarte CK ist ein Halbleiterchip angeordnet, in dem eine erfindungsgemäße Datenverarbeitungseinrichtung realisiert ist. Die Datenverarbeitungseinrichtung weist eine CPU auf, die über einen Bus mit Speichern ROM, EEPROM verbunden ist. Es können natürlich noch weitere für die Funktion eines Microcomputers nötigen oder vorteilhaften Schaltungen mit dem Bus verbunden sein. Der CPU ist eine Verschlüsselungseinheit VE zugeordnet. In den Speichern ROM, EEPROM sind zumindest die für die Sicherheit der elektronischen Datenverarbeitungseinrichtung relevanten Daten in codierter Form abgespeichert. Um sie in der CPU verarbeiten zu können, müssen sie zuerst von der Verschlüsselungseinheit VE mittels eines geheimen Schlüssels entschlüsselt werden. In den Speichern ROM, EEPROM abzuspeichernde Daten können vor dem Abspeichern von der Verschlüsselungseinheit VE verschlüsselt werden.

Die Verschlüsselungseinheit VE ver- und entschlüsselt die Daten mittels eines oder mehreren geheimen Schlüsseln Key1, Key2. Diese sind in einem oder auch in mehreren der Speicher ROM, EEPROM gespeichert. Eine Ver- oder Entschlüsselung kann jedoch erst stattfinden, nachdem ein Schlüsselwort SW über die Tastatur T des Lesegeräts LG von einem Benutzer eingegeben wurde und an die elektronische Datenverarbeitungseinrichtung der Chipkarte CK übermittelt wurde. Die elektronisch Datenverarbeitungseinrichtung weist einen Vergleicher V auf, dem sowohl das Schlüsselwort SW als auch über eine Leitung KL ein gespeicherter geheimer Schlüssel Key1, Key2 zugeführt wird. Nur bei einem positiven Vergleich, also nur, wenn das eingegebene Schlüsselwort SW dem geheimen Schlüssel Key1, Key2 entspricht, wird das Schlüsselwort SW über eine Leitung SWL und eine Schalteinrichtung SE, die von dem Vergleicher V angesteuert wird, der Verschlüsselungseinrichtung VE zugeführt. Der Vergleicher V kann auch durch die CPU realisiert sein.

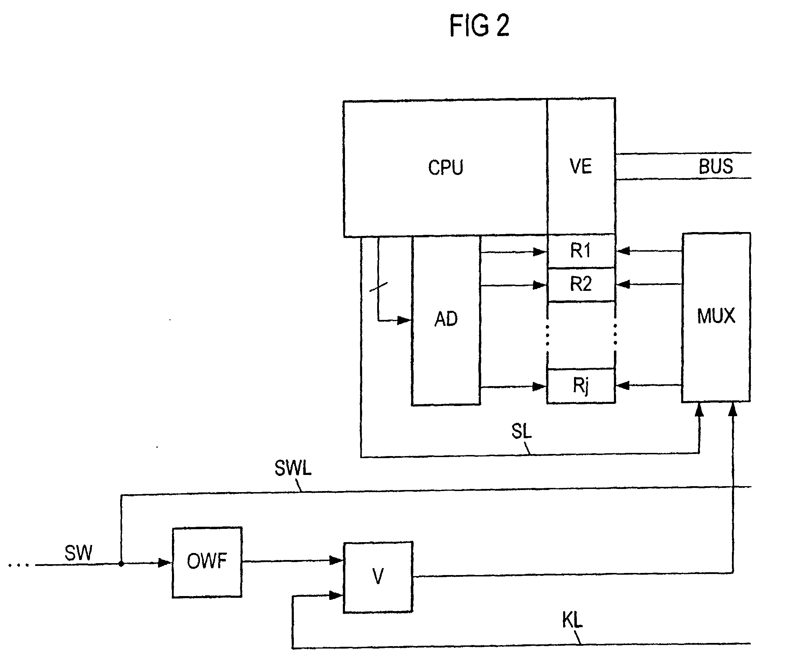

Wie in Figur 2 dargestellt ist, können der Verschlüsselungseinheit VE Register R1...Rj zugeordnet sein, in die das eine Schlüsselwort oder die mehreren den abgespeicherten geheimen Schlüsseln zugeordneten Schlüsselwörter SW über einen Multiplexer MUX eingeschrieben werden. Der Multiplexer wird dabei von dem Vergleicher V angesteuert und stellt eine Weiterbildung der Schalteinrichtung SE der Figur 1 dar. Bei mehreren Schlüsselwörtern SW kann in erfindungsgemäßer Weiterbildung das jeweils aktuelle mittels eines Adreßdecoders AD, der der CPU zugeordnet ist, ausgewählt werden. Dazu wird dem Adreßdecoder AD die Adresse des von der CPU jeweils aktuell adressierten Speicherplatzes zugeführt und entsprechend einer im Adreßdecoder oder auch sonstwo abgespeicherten Tabelle das entsprechende Register R1...Rj ausgewählt. Das in dem ausgewählten Register R1...Rj gespeicherte Schlüsselwort SW wird dann von der Verschlüsselungseinheit VE zur Verschlüsselung beziehungsweise Entschlüsselung herangezogen.

Die geheimen Schlüssel Key1, Key2 können zwar uncodiert abgespeichert sein, in besonders vorteilhafter Weise sind sie jedoch in codierter Form abgespeichert. Zur Codierung wird vorzugsweise eine sogenannte Einwegfunktion (One Way Function) OWF verwendet. Eine solche Einwegfunktion hat den Effekt, daß selbst bei Kenntnis der Funktion und des Ergebnisses der Eingangswert nicht oder nur mit immensem Rechenaufwand ermittelt werden kann. Da auf dem die erfindungsgemäße elektronisch Datenverarbeitungseinrichtung realisierenden Halbleiterchip lediglich die codierte Form der geheimen Schlüssel und verschlüsselte Daten gespeichert sind, ist es einem Betrüger nicht möglich, die Originaldaten zu erhalten. Die Einwegfunktion OWF kann ebenfalls auch durch die CPU realisiert sein.

Wie in Figur 2 ebenfalls dargestellt ist, wird ein vom Lesegerät LG übermitteltes Schlüsselwort SW über eine die Einwegfunktion realisierende Schaltung OWF dem Vergleicher V zugeführt. Vom Vergleicher V werden dann die codierten Formen des gespeicherten geheimen Schlüssels Key1, Key2 und des Schlüsselworts SW miteinander verglichen und nur im Fall eines positiven Vergleichsergebnisses wird die nicht codierte Form des Schlüsselwortes SW über einen Leitung SWL und den Multiplexer MUX in eines der Register R1...Rj eingeschrieben. Wie bereits ausgeführt wurde, sind die Register R1...Rj flüchtig, so daß die nicht codierte Form des Schlüsselwortes SW nur im autorisierten Betrieb der Chipkarte CK gespeichert ist und nach Beenden des Betriebs wieder gelöscht wird.

Durch die erfindungsgemäße elektronische Datenverarbeitungseinrichtung beziehungsweise das erfindungsgemäße Datenverarbeitungssystem ist es also möglich, in einem Halbleiterchip einer Chipkarte gespeicherte Daten durch lediglich autorisiertes Ver- und Entschlüsseln vor unberechtigtem Zugriff zu schützen.

## Patentansprüche

1. Als integrierter Schaltkreis ausgebildete elektronische Datenverarbeitungseinrichtung
a mit einer Verarbeitungseinheit (CPU), die über einen Bus mit zumindest einem Speicher (ROM, EEPROM) verbunden ist,
b mit einer der Verarbeitungseinheit (CPU) zugeordneten Ver- und Entschlüsselungseinheit (VE),
c wobei zumindest ein geheimer Schlüssel (Key1, Key2) in dem oder einem der Speicher (ROM, EEPROM) abgespeichert ist,
d und zumindest alle sicherheitsrelevanten Daten verschlüsselt in dem oder den Speicher(n) (ROM, EEPROM) gespeichert sind oder werden,
e mit einem Vergleicher (V) zum Vergleichen des gespeicherten geheimen Schlüssels (Key1, Key2) mit einem von einem Benutzer einzugebenden Schlüsselwort (SW) und
f mit einer von dem Vergleicher (V) angesteuerten, die Ver- und Entschlüsselungseinheit (VE) ansteuernden Schalteinheit (SE; MUX), die eine Verschlüsselung zu speichernder bzw. Entschlüsselung gespeicherter Daten nur bei positivem Vergleich ermöglicht,
g indem das eingegebene Schlüsselwort (SW) gesteuert durch die Schalteinheit (SE; MUX) zur Ver- und Entschlüsselungseinheit (VE) zur Ver- bzw. Entschlüsselung durchgeschaltet wird.

2. Datenverarbeitungseinrichtung nach Anspruch 1, **dadurch gekennzeichnet, daß** der Speicher für den oder die geheimen Schlüssel (Key1, Key2) ein ROM, ein EEPROM, ein Flash- oder ein FRAM-Speicher ist.

3. Datenverarbeitungseinrichtung nach Anspruch 1 oder 2, **dadurch gekennzeichnet, daß** zumindest ein der Verschlüsselungseinheit (VE) zugeordnetes Register (R1...Rj)vorgesehen ist, in das oder die der oder die geheime(n) Schlüssel (Key1, Key2) nach positivem Vergleich eingeschrieben wird oder werden.

4. Datenverarbeitungseinrichtung nach einem der Ansprüche 1 bis 3, **dadurch gekennzeichnet, daß** eine eine Einwegfunktion realisierende Schaltung (OWF) vorgesehen ist, über die das Schlüsselwort (SW) dem Vergleicher (V) zugeführt wird und daß der oder die geheime(n) Schlüssel (Key1, Key2) in mit der Einwegfunktion (OWF) verschlüsselter Form gespeichert ist.

5. Datenverarbeitungseinrichtung nach einem der Ansprüche 1 bis 4, **dadurch gekennzeichnet, daß** der Verschlüsselungseinheit (VE) ein Adreßdekoder (AD) zugeordnet ist, der eine Ver-bzw. Entschlüsselung von Daten von einer durch die Verarbeitungseinheit (CPU) angesprochenen Adresse abhängig macht.

6. Datenverarbeitungseinrichtung nach Anspruch 5, **dadurch gekennzeichnet, daß** bei mehreren geheimen Schlüsseln (Key1, Key2) der jeweils aktuelle Schlüssel mittels des Adreßdekoders (AD) abhängig vom adressierten Speicherbereich wählbar ist.

7. Datenverarbeitungssystem mit einer Datenverarbeitungseinrichtung nach einem der vorhergehenden Ansprüche und einem Lesegerät (LG) zur Kommunikation mit der Datenverarbeitungseinrichtung, in das durch einen Benutzer das Schlüsselwort (SW) eingebbar ist.

8. Datenverarbeitungssystem nach Anspruch 7, **dadurch gekennzeichnet, daß** die Datenverarbeitungseinrichtung Bestandteil einer Chipkarte (CK) ist.

## Claims

1. Electronic data-processing device designed as an integrated circuit,
a having a processing unit (CPU) connected to at least one memory (ROM, EEPROM) via a bus,
b having an encryption and decryption unit (VE) associated with the processing unit (CPU),
c at least one secret key (Key1, Key2) being stored in the memory or one of the memories (ROM, EEPROM),
d and at least all the security-related data being or becoming stored in encrypted form in the memory or memories (ROM, EEPROM),
e having a comparator (V) for comparing the stored secret key (Key1, Key2) with a keyword (SW) which can be input by a user, and
f having a switching unit (SE; MUX) which is driven by the comparator (V), drives the encryption and decryption unit (VE) and enables data which is to be stored to be encrypted, or enables stored data to be decrypted, only if the comparison is positive,
g by the keyword (SW) which is input being passed through, under the control of the switching unit (SE; MUX), to the encryption and decryption unit (VE) for encryption and decryption.

2. Data-processing device according to Claim 1, **characterized in that** the memory for the secret key or keys (Key1, Key2) is a ROM, an EEPROM, a flash or a FRAM memory.

3. Data-processing device according to Claim 1 or 2, **characterized in that** at least one register (R1...Rj) associated with the encryption unit (VE) is provided, the secret key or keys (Key1, Key2) being written to said register (R1...Rj) after a positive comparison.

4. Data-processing device according to one of Claims 1 to 3, **characterized in that** a circuit (OWF) implementing a one-way function is provided and is used to pass the keyword (SW) to the comparator (V), and **in that** the secret key(s) (Key1, Key2) is(are) stored in a form encrypted using the one-way function (OWF).

5. Data-processing device according to one of Claims 1 to 4, **characterized in that** the encryption unit (VE) has an address decoder (AD) associated with it which makes encryption or decryption of data dependent on an address called by the processing unit (CPU).

6. Data-processing device according to Claim 5, **characterized in that**, when there are a plurality of secret keys (Key1, Key2), the respectively current key can be selected by means of the address decoder (AD) as a function of the addressed memory area.

7. Data-processing system having a data-processing device according to one of the preceding claims and having a reader (LG) for communicating with the data-processing device, into which reader (LG) a user can input the keyword (SW).

8. Data-processing system according to Claim 7, **characterized in that** the data-processing device is a component part of a smart card (CK).

## Revendications

1. Dispositif électronique de traitement de données conçu sous forme de circuit intégré,
a) ayant une unité de traitement (CPU) qui est reliée à au moins une mémoire (ROM, EEPROM) par l'intermédiaire d'un bus,
b) ayant une unité de chiffrement et de déchiffrement (VE) associée à l'unité de traitement (CPU),
c) au moins un code secret (Key1, Key2) étant mémorisé dans la mémoire ou dans l'une des mémoires (ROM, EEPROM),
d) et au moins toutes les données déterminantes pour la sécurité étant ou devenant mémorisées sous forme chiffrée dans la ou les mémoires (ROM, EEPROM),
e) ayant un comparateur (V) pour la comparaison du code secret mémorisé (Key1, Key2) avec un mot de passe (SW) à entrer par l'utilisateur et
f) ayant une unité de commutation (SE ; MUX) qui est commandée par le comparateur (V) , qui commande l'unité de chiffrement et de déchiffrement (VE) et qui ne permet un chiffrement de données à mémoriser ou un déchiffrement de données mémorisées qu'en cas de comparaison positive,
g) le mot de passe (SW) entré, selon la commande de l'unité de commutation (SE ; MUX), étant envoyé à l'unité de chiffrement et de déchiffrement (VE) pour le chiffrement ou le déchiffrement.

2. Dispositif de traitement de données selon la revendication 1, **caractérisé par le fait que** la mémoire pour le ou les codes secrets (Key1, Key2) est une ROM, une EEPROM, une mémoire Flash ou une mémoire FRAM.

3. Dispositif de traitement de données selon la revendication 1 ou 2, **caractérisé par le fait qu'**il est prévu au moins un registre (R1 à Rj) qui est associé à l'unité de chiffrement (VE) et dans lequel ou dans lesquels le ou les codes secrets (Key1, Key2) sont enregistrés après une comparaison positive.

4. Dispositif de traitement de données selon l'une des revendications 1 à 3, **caractérisé par le fait qu'**il est prévu un circuit (OWF) qui réalise une fonction à sens unique et par l'intermédiaire duquel le mot de passe (SW) est envoyé au comparateur (V) et que le ou les codes secrets (Key1, Key2) sont mémorisés sous une forme chiffrée avec la fonction à sens unique (OWF).

5. Dispositif de traitement de données selon l'une des revendications 1 à 4, **caractérisé par le fait qu'**il est associé à l'unité de chiffrement (VE) un décodeur d'adresse (AD) qui rend un chiffrement ou un déchiffrement de données dépendant d'une adresse demandée par l'unité de traitement (CPU).

6. Dispositif de traitement de données selon la revendication 5, **caractérisé par le fait que**, s'il y a plusieurs codes secrets (Key1, Key2), le code respectivement actuel peut être choisi au moyen du décodeur d'adresse (AD) en fonction de la zone d'adresse adressée.

7. Système de traitement de données comportant un dispositif de traitement de données selon l'une des revendications précédentes et un appareil de lecture (LG) qui est destiné à la communication avec le dispositif de traitement de données et dans lequel le mot de passe (SW) peut être entré par un utilisateur.

8. Système de traitement de données selon la revendication 7, **caractérisé par le fait que** le dispositif de traitement de données fait partie d'une carte à puce (CK).
